# EUROPEAN PATENT APPLICATION

(11) **EP 4 794 033 A1**
(43) Date of publication of application: **19.08.2026**
(21) Application number: 24891708.0
(22) Date of filing: 07.11.2024
(51) Int. Cl.: H01M 4/66, H01M 4/13, H01M 10/052, H01M 10/0562, H01M 10/0585

(54) **FE-NI ALLOY CURRENT COLLECTOR HAVING LOW RESISTANCE MULTILAYER STRUCTURE AND SECONDARY BATTERY COMPRISING SAME**

(30) Priority: 14.11.2023 KR 20230157336; 14.11.2023 KR 20230157337
(71) Applicant: Framto Inc., Pohang-si Gyeongsangbuk-do 37673 (KR)
(72) Inventor: JUNG, Gwan Ho, Pohang-si, Gyeongsangbuk-do 37673 (KR); KIM, Ki Soo, Pohang-si, Gyeongsangbuk-do 37673 (KR); YOO, Shin, Pohang-si, Gyeongsangbuk-do 37673 (KR); SIM, Young Sub, Pohang-si, Gyeongsangbuk-do 37673 (KR); HONG, Dae Myung, Pohang-si, Gyeongsangbuk-do 37673 (KR); KIM, Ji Won, Pohang-si, Gyeongsangbuk-do 37673 (KR); WE, Yu Jung, Pohang-si, Gyeongsangbuk-do 37673 (KR)
(74) Representative: Beck & Rössig European Patent Attorneys
(86) International application number: PCT/KR2024/017493
(87) International publication number: WO 2025/105762

(57) **Abstract**

The present invention relates to a current collector that has a Fe-Ni alloy formed on at least one surface of a core part composed of copper foil and which exhibits low resistance and high strength while improving corrosion resistance when used as a current collector of a secondary battery to which lithium ions and a lithium metal negative electrode or a sulfide-based solid electrolyte are applied.

## Description

### TECHNICAL FIELD

The present invention was supported by the following two national research and development projects.
[Unique Project ID] 1415188492
[Project Number] 20024818
[Relevant Ministry] Ministry of Trade, Industry and Energy
[Project Management (Specialized) Agency] Korea Planning and Evaluation Institute of Industrial Technology
[Research Project] Development of material and component technology
[Title of the Research Project] Technological development of high-strength corrosion-resistant lightweight current collector material for sulfide-based all-solid-state battery
[Unique Project ID] 1425179998
[Project Number] 00262524
[Relevant Ministry] Ministry of SMEs and Startups
[Project Management (Specialized) Agency] Korea Technology Information Promotion Agency for SMEs
[Research Project] Tech-startup R&D program (materials, components, and equipment account)
[Title of the Research Project] Production and application product development of roll-to-roll continuous electroforming technology-based ultra-thin Fe-based alloy foil
The present invention relates to a Fe-Ni alloy current collector having a low-resistance multilayer structure and a secondary battery including the same.

### BACKGROUND ART

A lithium secondary battery has been widely used due to its most excellent energy density and output characteristics among various secondary batteries. In addition, as the demand for electric vehicles, large-capacity power storage devices, etc. are increasing, development of high-energy batteries has been required to meet the demands.

In response to this, as a method for achieving a high-energy density of 400 Wh/kg or greater, technology for applying a lithium metal negative electrode to a secondary battery has been actively developed. However, recently, there are continuing reports that in case of applying a lithium metal to a negative electrode, battery life is reduced due to corrosion of a Cu foil that is used as a negative electrode current collector.

Meanwhile, a carbonate-based organic solvent, which is included in a liquid electrolyte currently widely used in lithium secondary batteries, has the problems of low thermal stability and very high flammability. To solve the above problems, research for all-solid-state battery technology using a solid electrolyte has been actively conducted, but in a sulfide-based all-solid-state battery which has been researched/developed most actively, there are emerging problems that a sulfide-based solid electrolyte corrodes a Cu-foil that is a current collector.

In the secondary battery, the current collector serves as a connecting medium for supplying electrons or holes, provided from external conductors, to an electrode active material, or conversely, serves as a messenger to collect electrons or holes generated as a result of electrode reaction and to flow through the external conductors. In addition, the current collector functions as an important support to realize the shape of an actual electrode plate. Also, it is important that a metal constituting a negative electrode current collector does not oxidize in a low potential region, and a metal constituting a positive electrode current collector does not oxidize in a high potential region. Generally, in consideration of electrical conductivity, electrochemical stability, and compatibility in a plate production process, copper (Cu) is used as the current collector for a negative electrode, and aluminum (Al), platinum (Pt), or the like is used as the current collector for a positive electrode, and active material particles are applied thereto, and then dried to produce an electrode.

However, as previously described, the Cu foil has a critical problem of generating corrosion in a lithium metal battery and a sulfide-based all-solid-state battery, and since aluminum (Al) cannot be used in a negative electrode, there is a problem that aluminum (Al) alone cannot be used as a current collector having both negative electrode and positive electrode characteristics. In addition, platinum (Pt) is too expensive, causing a problem of increasing the battery price, so that there are limitations in terms of economic efficiency in application to batteries and mass production.

### DISCLOSURE OF THE INVENTION

### TECHNICAL PROBLEM

A first objective of the present invention is to provide a current collector having low-resistance and high-strength characteristics as well as having low corrosion even when used in a lithium secondary battery having a negative electrode containing a high content of silicon (Si) being applied thereto, in a secondary battery using a lithium metal negative electrode, or in a sulfide-based all-solid-state battery.

A second objective of the present invention is to provide a current collector having low-resistance and high-strength characteristics with positive electrode characteristics or bipolar characteristics having both negative electrode and positive electrode characteristics, as well as having low corrosion even when used in a lithium secondary battery having a negative electrode containing a high content of silicon (Si) being applied thereto, in a secondary battery using a lithium metal negative electrode, or in a sulfide-based all-solid-state battery.

A third objective of the present invention is to provide a secondary battery capable of realizing high energy density by including the current collector.

However, the problems to be solved by the present invention are not limited to those mentioned above, and other problems not mentioned herein will be clearly understood by those skilled in the art from the description below.

### TECHNICAL SOLUTION

To achieve the above objectives, the present invention provides a Fe-Ni alloy current collector having a low-resistance multilayer structure according to (1) to (14) in the following, and a secondary battery according to (15) to (16) including the current collector.
(1) As a current collector of a battery, a Fe-Ni alloy current collector having a low-resistance multilayer structure including a Cu foil and a Fe-Ni alloy layer formed on at least one surface of the Cu foil and containing iron (Fe) and nickel (Ni).
(2) The Fe-Ni alloy current collector having a low-resistance multilayer structure of (1), wherein the Fe-Ni alloy layer is formed on both surfaces of the Cu foil.
(3) The Fe-Ni alloy current collector having a low-resistance multilayer structure of (1) or (2), further including a negative electrode characteristic material layer or a positive electrode characteristic material layer which is formed on the Fe-Ni alloy layer.
(4) The Fe-Ni alloy current collector having a low-resistance multilayer structure of (2), further including a negative electrode characteristic material layer that is formed on the Fe-Ni alloy layer of one surface among the both surfaces, and a positive electrode characteristic material layer that is formed on the Fe-Ni alloy layer of the other surface among the both surfaces.
(5) The Fe-Ni alloy current collector having a low-resistance multilayer structure of (3) or (4), wherein the negative electrode characteristic material layer includes one or more selected from the group consisting of nickel (Ni), titanium (Ti), chrome (Cr), molybdenum (Mo), silver (Ag), cobalt (Co), gold (Au), ruthenium (Ru), platinum (Pt), iridium (Ir), and an alloy thereof.
(6) The Fe-Ni alloy current collector having a low-resistance multilayer structure of (3) or (4), wherein the positive electrode characteristic material layer includes at least one selected from the group consisting of aluminum (Al), nickel (Ni), titanium (Ti), and an alloy thereof.
(7) The Fe-Ni alloy current collector having a low-resistance multilayer structure of any one of (1) to (4), wherein the current collector has a thickness of 4 to 20 µm.
(8) The Fe-Ni alloy current collector having a low-resistance multilayer structure of any one of (1) to (4), wherein the Cu foil has a thickness of 3 to 14 µm.
(9) The Fe-Ni alloy current collector having a low-resistance multilayer structure of any one of (1) to (4), wherein a total thickness of the Fe-Ni alloy layers formed on the both surfaces of the Cu foil is 1 to 6 µm.
(10) The Fe-Ni alloy current collector having a low-resistance multilayer structure of any one of (1) to (4), wherein the Fe-Ni alloy layer includes nickel (Ni) in an amount of 10 to 90 wt%, and the remainder being iron (Fe) and unavoidable impurities.
(11) The Fe-Ni alloy current collector having a low-resistance multilayer structure of (3) or (4), wherein the negative electrode characteristic material layer has a thickness of 10 nm to 1 µm.
(12) The Fe-Ni alloy current collector having a low-resistance multilayer structure of (3) or (4), wherein the positive electrode characteristic material layer has a thickness of 0.09 to 2 µm.
(13) The Fe-Ni alloy current collector having a low-resistance multilayer structure of any one of (1) to (4), wherein the current collector has a resistivity value of 5 x 10⁻⁸ Ωm or less.
(14) The Fe-Ni alloy current collector having a low-resistance multilayer structure of any one of (1) to (4), wherein the Fe-Ni alloy layer has an average crystal grain size of 15 nm or less (excluding 0 nm), and the current collector has a tensile strength of 600 MPa or greater, and an elongation of 3% or greater.
(15) A secondary battery including a first electrode containing the current collector described in any one of (1) to (4) and a first active material layer formed on the current collector, a second electrode disposed in the opposite of the first electrode, and containing a second current collector and a second active material layer formed on the second current collector, and an electrolyte disposed between the first electrode and the second electrode to provide an environment where lithium ions are capable of moving.
(16) The secondary battery of (15), wherein the electrolyte includes a solid electrolyte.

### ADVANTAGEOUS EFFECTS

A current collector according to the present invention includes an alloy containing iron (Fe) and nickel (Ni), and thus has excellent corrosion resistance when used as a current collector in a secondary battery in which a lithium ion and lithium metal negative electrode or a sulfide-based solid electrolyte is applied. Through this, a lithium ion battery, a lithium metal battery, and an all-solid-state battery capable of improving capacity and output characteristics and improving battery stability may be achieved.

In addition, since the current collector according to the present invention has low resistance and high strength, lightweight and/or high capacity of a secondary battery may be achieved by decreasing the amount of use of the current collector or increasing the coating amount of an active material.

Furthermore, due to the bipolar characteristics having both negative electrode and positive electrode characteristics, low resistance, and high strength according to an embodiment of the present invention, lightweight and high capacity may be achieved by decreasing the amount of use of the current collector and increasing the active material.

### BRIEF DESCRIPTION OF THE DRAWINGS

FIG. 1 illustrates a laminate structure of a current collector according to a first embodiment of the present invention.
FIG. 2 illustrates a laminate structure of a current collector according to a second embodiment of the present invention.
FIG. 3 illustrates a laminate structure of a current collector according to a third embodiment of the present invention.
FIG. 4 illustrates a laminate structure of a current collector according to a fourth embodiment of the present invention.
FIG. 5 illustrates a laminate structure of a secondary battery according to a fifth embodiment of the present invention.
FIG. 6 illustrates a laminate structure of a secondary battery according to a sixth embodiment of the present invention.
FIG. 7 illustrates a laminate structure of a secondary battery according to a seventh embodiment of the present invention.
FIG. 8 illustrates a laminate structure of a secondary battery according to an eighth embodiment of the present invention.
FIG. 9 is a schematic diagram illustrating a process of producing a multi-layered current collector according to the first embodiment of the present invention, and a production apparatus.
FIG. 10 is a schematic diagram illustrating a process of producing a multi-layered current collector according to the second to eighth embodiments of the present invention, and a production apparatus.

### MODE FOR CARRYING OUT THE INVENTION

Hereinafter, embodiments of the present application are described in detail so that a person skilled in the art to which the present application pertains can easily implement the invention with reference to the accompanying drawings. However, the present application may be implemented in several different forms, and is not limited to the embodiments to be described herein.

In addition, in order to clearly explain the present application in the drawings, parts unrelated to the explanation have been omitted, and similar parts throughout the specification have been given similar reference numerals or symbols.

Throughout the entire specification of the present application, when a part is described as being "connected" to another part, this includes not only cases where they are "directly connected", but also cases where they are "electrically connected" with other elements in between.

Throughout the entire specification of the present application, when a component is described as being located "on". "above", "on upper side", "under", "below", or "on lower side" of another component, this includes not only cases where a component is in contact with another component but also cases where another component exists between the two components.

Throughout this specification of the present application, when a part is described as "comprising" a certain component, this means that, unless specifically stated otherwise, it does not exclude other components but may include other components additionally.

Throughout this specification of the present application, the term "alloy thereof" included in the expressions of the Markush form mean a mixture or a combination of one or more selected from the group consisting of the components described in the expressions of the Markush form, and means an alloy comprising one or more selected from the group consisting of the components.

Throughout this specification of the present application, the term "A and/or B" means "A or B, or A and B".

### <Current Collector and All-Solid-State Battery>

### [First Embodiment]

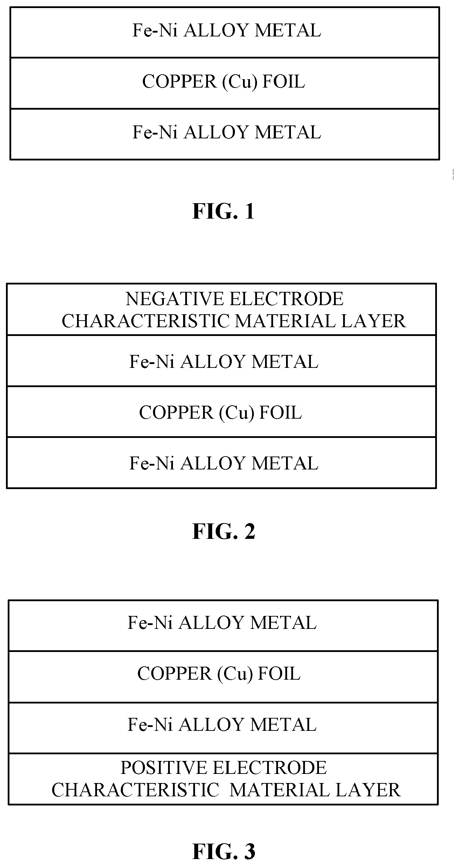

FIG. 1 illustrates a laminate structure of a current collector according to a first embodiment of the present invention.

Referring to FIG. 1, a multi-layered current collector according to an embodiment of the present invention has a structure in which a Cu foil is disposed in a core part of the current collector, and a Fe-Ni alloy layer containing iron (Fe) and nickel (Ni) is formed on both surfaces of the Cu foil.

The Cu foil may include pure copper (Cu) with a purity of 99.9% or greater, and also include a copper (Cu) alloy containing another element in an amount of 50% or less in addition to copper (Cu). The element that can be added to the copper (Cu) alloy includes, for example, a metal element such as zinc (Zn), tin (Sn), chrome (Cr), magnesium (Mg), iron (Fe), cobalt (Co), nickel (Ni), silver (Ag), silicon (Si), manganese (Mn), and tungsten (W), or a non-metal element such as carbon (C), sulfur (S), nitrogen (N), and chlorine (Cl).

The Fe-Ni alloy layer that is laminated on both surfaces of the Cu foil is a layer that provides corrosion resistance (anti-rust) to the current collector when used in a lithium secondary battery having a negative electrode containing a high content of silicon (Si), in a secondary battery using a lithium metal negative electrode, or in a sulfide-based all-solid-state battery. The Fe-Ni alloy layer may include nickel (Ni) preferably in an amount of 10 to 90 wt%, and more preferably include nickel (Ni) in an amount of 10 to 33 wt% or 40 to 90 wt%.

When the multi-layered current collector has a thickness less than 4 µm, it is difficult to form a normal foil, and when greater than 20 µm, the volume of the current collector increases, so that the coating amount of an active material decreases significantly, and therefore, the thickness of the current collector is preferably 4 to 20 µm, and more preferably 4 to 12 µm.

When the Cu foil that makes up the current collector has a thickness less than 3 µm, it is difficult to form a normal foil, and when greater than 14 µm, the volume of the current collector increases, so that the coating amount of an active material decreases significantly, and therefore, the thickness of the Cu foil is preferably 3 to 14 µm, and more preferably 3 to 11 µm.

When the total thickness of the Fe-Ni alloy layers formed on both surfaces of the Cu foil is less than 1 µm, coating is impossible throughout the entire region of the Cu foil, causing pinholes, and when greater than 6 µm, it is not economical compared to the effect of improving corrosion resistance, so that the total thickness of the Fe-Ni alloy layers is preferably 1 to 6 µm, and more preferably 1 to 4 µm. In addition, on one surface of the Cu foil, for example, a Fe-Ni alloy layer of 0.5 µm to 5.5 µm may be formed.

### [Second Embodiment]

FIG. 2 illustrates a laminate structure of a current collector according to a second embodiment of the present invention.

Referring to FIG. 2, a current collector according to the second embodiment is characterized that a negative electrode characteristic material layer is formed on one surface (upper side on the drawing) of the current collector according to the first embodiment.

The negative electrode characteristic material layer may include at least one selected from the group consisting of, for example, copper (Cu), nickel (Ni), titanium (Ti), chrome (Cr), molybdenum (Mo), silver (Ag), cobalt (Co), gold (Au), ruthenium (Ru), platinum (Pt), iridium (Ir), and an alloy thereof, and preferably, titanium (Ti), nickel (Ni), silver (Ag), or an alloy thereof.

When the negative electrode characteristic material layer has a thickness less than 10 nm, coating is impossible throughout the entire region of the foil, causing pinholes, and when greater than 1 µm, the volume of the current collector increases, so that the coating amount of an active material decreases, and therefore, it is preferred that the thickness falls within the range of 10 nm to 1 µm.

### [Third Embodiment]

FIG. 3 illustrates a laminate structure of a current collector according to a third embodiment of the present invention.

Referring to FIG. 3, a current collector according to the third embodiment is characterized that a positive electrode characteristic material layer is formed on one surface (lower side on the drawing) of the current collector according to the first embodiment.

The positive electrode characteristic material layer may include at least one selected from the group consisting of aluminum (Al), nickel (Ni), titanium (Ti), and an alloy thereof.

When the positive electrode characteristic material layer has a thickness less than 0.09 µm, coating is impossible throughout the entire region of the foil, causing pinholes, and when greater than 2 µm, the volume of the current collector increases, so that the coating amount of an active material decreases, and therefore, it is preferred that the thickness falls within the range of 0.09 to 2 µm.

### [Fourth Embodiment]

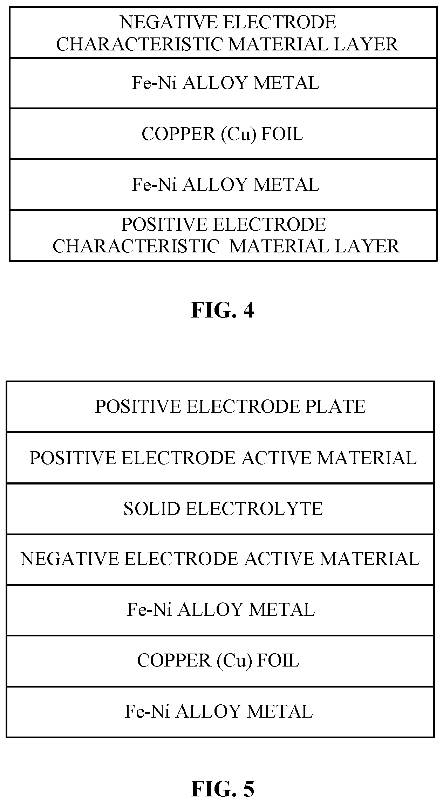

FIG. 4 illustrates a laminate structure of a current collector according to a fourth embodiment of the present invention.

Referring to FIG. 4, a current collector according to the fourth embodiment is characterized that the negative electrode characteristic material layer, which is the same as that of the second embodiment, is formed on one surface (upper side on the drawing) of the current collector according to the first embodiment, and the positive electrode characteristic material layer, which is the same as that of the third embodiment, is formed on the other surface (lower side on the drawing).

That is, the current collector according to the fourth embodiment is characterized by having bipolar characteristics through the applying of the positive electrode characteristic material layer and the negative electrode characteristic material layer.

### [Fifth Embodiment]

FIG. 5 illustrates a laminate structure of a secondary battery according to a fifth embodiment of the present invention.

Referring to FIG. 5, a secondary battery according to the fifth embodiment is formed by including a negative electrode having the multi-layered current collector according to the first embodiment and a negative electrode active material layer formed on one surface of the current collector, a positive electrode having a positive electrode plate and a positive electrode active material layer formed on one surface of the positive electrode plate, and a solid electrolyte layer disposed between the positive electrode and the negative electrode.

Various known positive electrode active materials may be included in the positive electrode active material layer, and also, various known negative electrode active materials may be included in the negative electrode active material layer, and for example, a carbon-based active material, such as graphite- and coke-based, may be included as the negative electrode active material.

Various known solid electrolyte compositions may be included in the solid electrolyte layer, and for example, a sulfide-based solid electrolyte may be used. At this time, a Fe-Ni alloy layer may suppress reaction with the sulfide-based solid electrolyte to enable the implementation of an all-solid-state battery with long lifespan.

Meanwhile, in the secondary battery according to the fifth embodiment, a structure in which a solid electrolyte is disposed between the positive electrode and the negative electrode is illustrated as an example, but a liquid electrolyte or a mixture of a solid and a liquid electrolytes may also be used, and in case of including the liquid electrolyte, a separator is further disposed between the positive electrode and the negative electrode.

### [Sixth Embodiment]

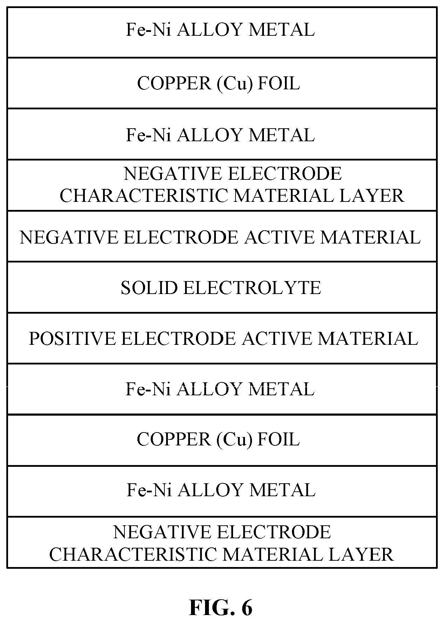

FIG. 6 illustrates a laminate structure of a secondary battery according to a sixth embodiment of the present invention.

Referring to FIG. 6, a secondary battery according to the sixth embodiment is formed by including a negative electrode having the multi-layered current collector according to the second embodiment and a negative electrode active material layer formed on the negative electrode characteristic material layer of the current collector, a positive electrode having the multi-layered current collector according to the second embodiment and a positive electrode active material layer formed on the Fe-Ni alloy layer of the current collector, and a solid electrolyte layer disposed between the positive electrode and the negative electrode.

That is, except that the negative electrode active material layer is formed on the negative electrode characteristic material layer, the secondary battery is the same as that of the fifth embodiment.

### [Seventh Embodiment]

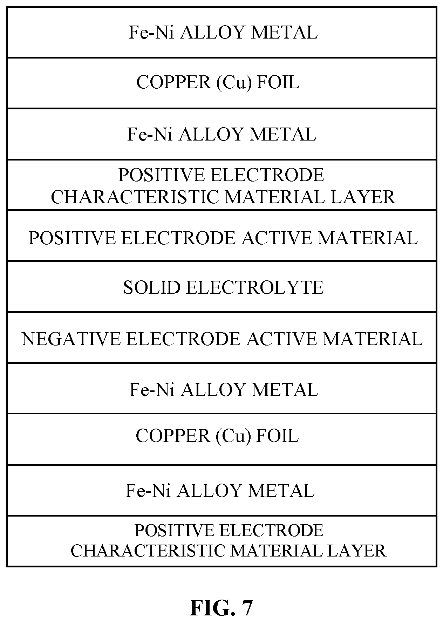

FIG. 7 illustrates a laminate structure of a secondary battery according to a seventh embodiment of the present invention.

Referring to FIG. 7, a secondary battery according to the seventh embodiment is formed by including a positive electrode having the multi-layered current collector according to the third embodiment and a positive electrode active material layer formed on the positive electrode characteristic material layer of the current collector, a negative electrode having the multi-layered current collector according to the second embodiment and a negative electrode active material layer formed on the Fe-Ni alloy layer of the current collector, and a solid electrolyte layer disposed between the positive electrode and the negative electrode.

That is, except that the positive electrode active material layer is formed on the positive electrode characteristic material layer, the secondary battery is the same as that of the fifth embodiment.

### [Eighth Embodiment]

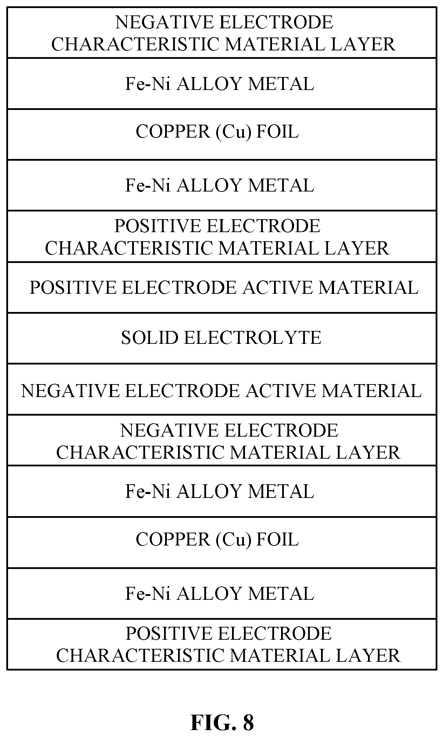

FIG. 8 illustrates a laminate structure of a secondary battery according to an eighth embodiment of the present invention.

Referring to FIG. 8, a secondary battery according to the eighth embodiment is formed by including a positive electrode having the multi-layered current collector according to the fourth embodiment and a positive electrode active material layer formed on the positive electrode characteristic material layer of the current collector, a negative electrode having the multi-layered current collector according to the fourth embodiment and a negative electrode active material layer formed on the negative electrode characteristic material layer of the current collector, and a solid electrolyte layer disposed between the positive electrode and the negative electrode.

That is, except that the positive electrode active material layer is formed on the positive electrode characteristic material layer, and the negative electrode active material layer is formed on the negative electrode characteristic material layer to provide bipolar characteristics, the secondary battery is the same as that of the fifth embodiment.

### [Example]

### <Producing Current Collector>

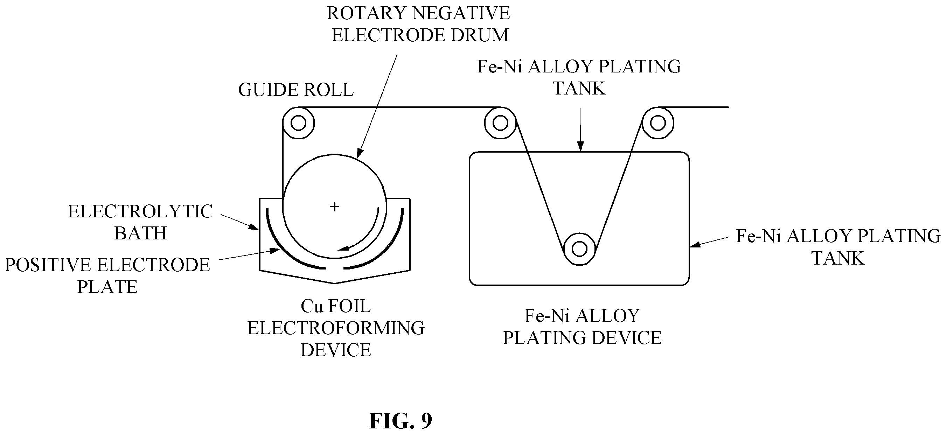

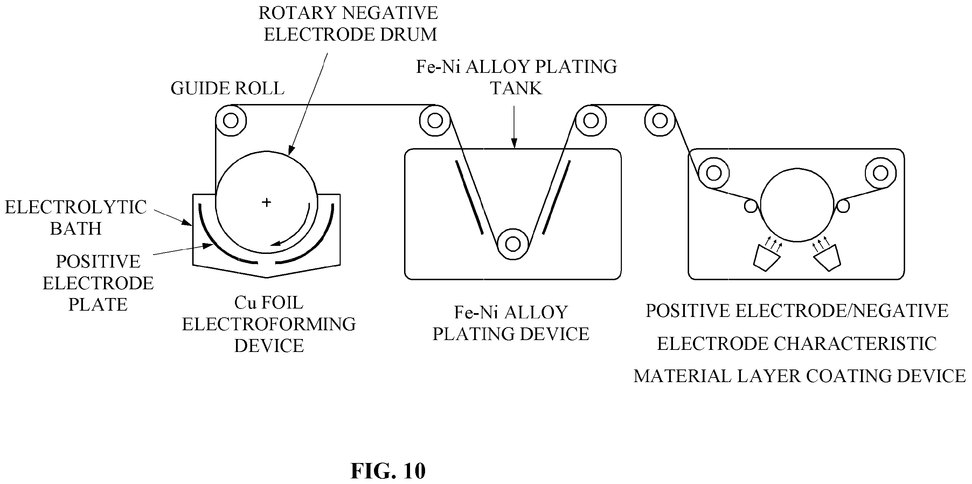

FIG. 9 is a schematic diagram illustrating a process of producing the multi-layered current collector according to the first embodiment of the present invention and a production apparatus, and FIG. 10 is a schematic diagram illustrating a process of producing the multi-layered current collector according to the second to eighth embodiments and a production apparatus.

Referring to FIGS. 9 and 10, by energizing a positive electrode plate and a rotary negative electrode drum disposed apart from each other in an electrolyte solution in an electrolytic bath, a Cu foil is formed on the rotary negative electrode drum by an electroforming method, and the produced Cu foil is guided into a Fe-Ni alloy plating tank by a guide roll to form a Fe-Ni alloy layer on both surfaces of the Cu foil.

In particular, an electrolyte solution for forming the Cu foil includes copper ions in 75 g/L and sulfuric acid in 100 g/L basically, and as an organic additive, an organic sulfide, an organic nitride, a conduction aid, and the like may be included. At this time, the electrolyte solution may be maintained at about 50 °C, the current density may be adjusted to 40 A/dm², and the flow rate may be adjusted to 35 m³/hr.

On the Cu foil produced as above, the Fe-Ni alloy layer may be formed by various known methods, and for example, formed by an electroforming method.

In case of using the electroforming method, the Fe-Ni alloy layer may be formed by using a plating solution containing iron (Fe) with a concentration of 1 to 80 g/L, nickel (Ni) with a concentration of 5 to 200 g/L, a stress reliever in 1.0 to 20 g/L, a conducting agent in 5 to 40 g/L, and a pH stabilizer in 5 to 40 g/L under conditions of 1.0 to 5.0 pH, 1 to 80 A/dm² current density, 40 to 90 °C plating solution temperature, and 0.2 to 5 m/sec flow rate.

At this time, the iron (Fe) may be dissolved and used in the form of salt such as iron sulfate, iron chloride, and iron sulfamate, or electrolytic iron and iron powder may be dissolved in hydrochloric acid or sulfuric acid, and supplied. In addition, the nickel (Ni) may be supplied in the form of salt such as nickel chloride, nickel sulphate, and nickel sulfamate, or supplied by dissolving ferronickel, etc. in acid. As the stress reliever, for example, saccharin, etc. may be used, and as the conducting agent, sodium chloride, etc. may be used, and as the pH stabilizer, boric acid, citric acid, etc. may be used.

Since the low-resistance multi-layered Fe-Ni alloy current collector substrate, produced in the electroforming method, has a small thickness of about 4 to 20 µm, and the Fe-Ni alloy layer has a small average crystal grain size of 15 nm or less, the mechanical property is excellent, so that mechanical strength required for an all-solid-state battery current collector may be provided.

In addition, as illustrated in FIG. 10, the negative electrode characteristic material layer and/or the positive electrode characteristic material layer may be formed on one surface of the current collector through a known deposition method, for example, an electron beam deposition method.

### <Producing All-Solid-State Battery>

In order to check if a battery can operate when the current collector, produced in the above method, is applied to an all-solid-state battery, the all-solid-state battery was produced in the following ① to ④ processes.
① A negative electrode active material layer is applied onto a current collector substrate (Cu foil with Fe-Ni alloy layers being formed on both surfaces thereof, the same applies below) or a current collector substrate on which a negative electrode characteristic material layer is applied.
② A solid electrolyte is applied onto the negative electrode active material layer on one portion of the current collector where a negative electrode active material is applied.
③ A positive electrode active material is applied onto a current collector substrate or a current collector substrate on which a positive electrode characteristic material layer is applied.
④ The current collector having the negative electrode active material and the solid electrolyte being applied onto one surface of the current collector prepared in ② above, and the current collector having the positive electrode active material being applied, prepared in ③ above, are laminated and packaged, pressurized (for example, by isostatic pressing) to produce an all-solid-state battery.
① to ③ of the process of producing the all-solid-state battery will be described in more detail.

### Applying negative electrode active material onto current collector

Materials constituting the negative electrode active material layer (negative electrode active material, binder, etc.) are mixed in a polar solvent or a non-polar solvent to prepare a slurry. The prepared slurry is applied onto the current collector, and dried to form the negative electrode active material layer. In addition, according to an embodiment of the present invention, although a wet coating method was exemplified as a method of forming a negative electrode active material layer, application of another method of forming an active material layer, such as a dry coating method, is not limited.

The negative electrode active material layer includes at least one of for example, a negative electrode active material that forms an alloy with lithium, or a negative electrode active material that forms a compound with lithium. In addition, by containing this negative electrode active material, the negative electrode active material layer may be provided such that lithium metal on surfaces of one side or both sides of the negative electrode active material layer can be precipitated. The negative electrode active material layer may further include a binder as needed. The binder may include one, or two or more from, for example, a styrene butadiene rubber (SBR), polytetrafluoroethylene (PET), polyvinylidene fluoride, polyethylene oxide, etc. The binder may suppress the release of the negative electrode active material, particularly in case that the negative electrode active material is in a particle form. The binder is included preferably in an amount of 3.0 to 15.0 wt% on the basis of the total mass of the negative electrode active material layer. In addition, in the negative electrode active material layer, known additives used in the all-solid-state battery, for example, a filler, dispersant, an ion conducting agent, etc. may be appropriately mixed.

The thickness of the negative electrode active material layer is not particularly limited in case that the negative electrode active material is in a particle form, but the thickness may be, for example, 1.0 to 20.0 µm, and preferably 1.0 to 10.0 µm. When the thickness falls within the above range, the above-described effect of the negative electrode active material layer may be achieved sufficiently, and also the resistance value of the negative electrode active material layer may be lowered sufficiently, so that characteristics of the all-solid-state secondary battery may be improved sufficiently.

Furthermore, the negative electrode active material layer is not limited to the embodiment previously described, and in another example embodiment, the negative electrode active material layer may be applied with another material and components that can be used as a negative electrode active material layer of an all-solid-state secondary battery.

### Applying solid electrolyte onto negative electrode active material layer

A solid electrolyte layer may be produced by a solid electrolyte that is formed from a sulfide-based solid electrolyte material. The solid electrolyte material used in the content disclosed herein may be a random solid electrolyte appropriately capable of conducting metal ions.

In addition, among the sulfide-based solid electrolyte materials, a material containing one or more elements selected from the group consisting of sulfur (S), silicon (Si), phosphorous (P), and boron (B) may be used. Accordingly, lithium conductivity of the solid electrolyte layer is improved, and battery characteristics of an all-solid-state battery is improved. In addition, as a component element of the solid electrolyte, at least sulfur (S), phosphorous (P), and lithium (Li) may be included. In particular, a solid electrolyte including an argyrodite-based lithium (Li₆PS₅Cl) may be used. In addition, the solid electrolyte layer may be a mixture of the electrolytes listed above.

The solid electrolyte layer may have a thickness of, for example, 1 to 100 µm. In addition, a binder may be further included in the solid electrolyte layer. The binder included in the solid electrolyte layer may include one, or two or more from for example, a styrene butadiene rubber (SBR), polytetrafluoroethylene (PET), polyvinylidene fluoride, polyethylene oxide, etc. The binder in the solid electrolyte layer may be the same as or different from a binder in a positive electrode active material layer.

A method of forming the solid electrolyte layer includes a method of pressing the solid electrolyte layer during a process of producing an all-solid-state battery. In this embodiment, the solid electrolyte layer is laminated in the method of pressing the solid electrolyte layer before laminating a positive electrode active material on a negative electrode active material layer.

In an embodiment of the present invention, a process of applying the solid electrolyte onto the negative electrode active material layer was exemplified, but the process is not limited to the embodiment previously described, and in another example embodiment, the solid electrolyte may be applied onto the positive electrode active material layer, and then laminated to produce an all-solid-state battery.

### Applying positive electrode active material onto positive electrode current collector

Al foil may be used for a positive electrode current collector (positive electrode plate), and like the negative electrode, materials constituting a positive electrode active material layer (positive electrode active material, binder, etc.) are mixed in a non-polar solvent to prepare a slurry, and then the slurry is applied onto the positive electrode current collector, and dried to apply the positive electrode active material. In addition, in an embodiment of the present invention, although a wet coating method was exemplified as a method of forming a positive electrode active material layer, application of another method of forming an active material layer, such as a dry coating method, is not limited.

The positive electrode active material is not particularly limited as long as it can reversibly absorb and release lithium ions. For example, the positive electrode active material may be a powder form or a particle form, which may be formed by using a lithium salt such as lithium cobalt oxide, lithium nickel oxide, lithium nickel cobalt oxide, lithium nickel cobalt aluminum oxide, lithium nickel cobalt manganese oxide, lithium manganate, and lithium iron phosphate, nickel sulfide, copper sulfide, sulfur, iron oxide, vanadium oxide, or the like. Such positive electrode active materials may each be used independently, and may be used in combination of two or more thereof.

### <Examples 1 to 6 and Comparative Examples 1 to 6>

Through the process of producing the current collector, previously described, a current collector in which a Fe-Ni alloy layer was formed on both surfaces of a Cu foil, and a current collector in which a titanium (Ti) layer was formed on one surface of the Fe-Ni alloy layer, as a negative electrode characteristic material layer, were produced, and the thicknesses and components thereof were listed in Table 1 below.

**[Table 1]**

| Classification | Thickness (µm) of Cu foil | Total thickness (µm) of Fe-Ni alloy layers | Thickness (µm) of negative electrode characteristic material layer | Note |
|---|---|---|---|---|
| Example 1 | 3 | 1 | - | Positive electrode plate: Al |
| Example 2 | 3 | 1 | 0.1 | Negative electrode characteristic material: Ti |
| Example 3 | 3 | 4 | 0.1 | Negative electrode characteristic material: Ti |
| Example 4 | 6 | 2 | - | |
| Example 5 | 6 | 2 | 0.1 | Negative electrode characteristic material: Ti |
| Example 6 | 6 | 4 | 0.1 | Negative electrode characteristic material: Ti |
| Comparative Example 1 | 3 | 0.8 | - | |
| Comparative Example 2 | 3 | 0.8 | 0.1 | Negative electrode characteristic material: Ti |
| Comparative Example 3 | 3 | 0.8 | 1 | Negative electrode characteristic material: Ti |
| Comparative Example 4 | 2.5 | ¹ | - | |
| Comparative Example 5 | 2.5 | 1 | 0.1 | Negative electrode characteristic material: Ti |
| Comparative Example 6 | 2.5 | 4 | 0.1 | Negative electrode characteristic material: Ti |

### <Examples 7 to 13 and Comparative Examples 7 to 12>

In addition, through the process of producing the current collector previously described, a positive electrode characteristic material layer was formed on one surface of the current collector substrate in which the Fe-Ni alloy layer was formed on both surfaces of the Cu foil, or a positive electrode characteristic material layer and a negative electrode characteristic material layer were respectively formed on both surfaces of the current collector substrate. At this time, as the negative electrode characteristic material layer, titanium (Ti) was formed, and as the positive electrode characteristic material layer, aluminum (Al) was formed. The thicknesses and components of the formed current collectors were listed in Table 2 below.

**[Table 2]**

| Classification | Thickness (µm) of Cu | Thickness (µm) of Fe-Ni coated layer | Thickness (µm) of negative electrode characteristic material layer | Thickness (µm) of positive electrode characteristic material layer | Note |
|---|---|---|---|---|---|
| Example 7 | 3 | 2 | - | 0.1 | Positive electrode characteristic material: Al |
| Example 8 | 3 | 2 | 0.1 | 0.1 | |
| Example 9 | 3 | 2 | 0.1 | 1.0 | |
| Example 10 | 3 | 2 | 1 | 0.1 | |
| Example 11 | 6 | 2 | 0.1 | 0.1 | Negative electrode characteristic material: Ti |
| Example 12 | 6 | 2 | 0.1 | 1.0 | |
| Example 13 | 6 | 3 | 0.1 | 1.0 | |
| Comparative Example 7 | 3 | 1.6 | - | 1 | |
| Comparative Example 8 | 3 | 1.6 | 0.1 | 1 | |
| Comparative Example 9 | 3 | 1.6 | 1 | 1 | |
| Comparative Example 10 | 2.5 | Impossible to form | - | - | |
| Comparative Example 11 | 2.5 | Impossible to form | - | - | |
| Comparative Example 12 | 2.5 | Impossible to form | - | - | |

Resistivity values of the current collectors, produced as above, according to Examples 1 to 13 and Comparative Examples 1 to 12 were measured according to ASTM D991 (four-point-probe) standards. The measured resistivity was determined according to the following evaluation criteria, and the results were listed in Table 3 and Table 4 below.

### Resistivity evaluation criteria

○: 5×10⁻⁸ Ωm or less
△: greater than 5×10⁻⁸ Ωm to 15×10⁻⁸ Ωm or less
×: greater than 15×10⁻⁸ Ωm

In addition, tensile strength values of the current collectors according to Examples 1 to 13 and Comparative Examples 1 to 12 were measured according to ASTM D882 standards. The measured tensile strength was determined according to the following evaluation criteria, and the results were listed in Table 3 and Table 4 below.

### Tensile strength evaluation criteria

○: 600 MPa or greater
×: less than 600 MPa

In addition, for the all-solid-state battery produced in the method for producing the all-solid-state battery, previously described, using the current collector according to each of Examples 1 to 13 and Comparative Examples 1 to 12, at 60°C, the battery was charged at 0.1 C to 4.2 V, and discharged at 0.5 C to 2.5 V, and whether the battery operated was checked, and the evaluation criteria for battery operation was as follows.

### Battery operation evaluation criteria

⊚: 92% or greater of initial capacity when charged and discharged 100 times
○: 90% or greater of initial capacity when charged and discharged 100 times
△: 80% or greater and less than 90% of initial capacity when charged and discharged 100 times
×: less than 80% of initial capacity when charged and discharged 100 times

Table 3 below shows the resistivity and strength results of the current collectors according to Examples 1 to 6 and Comparative Examples 1 to 6, and the results of evaluation on operation performance of the all-solid-state batteries produced using the current collectors.

**[Table 3]**

| Classification | Resistivity | Strength | Operation of all-solid-state battery |
|---|---|---|---|
| Example 1 | ○ | ○ | ○ |
| Example 2 | ○ | ○ | ⊚ |
| Example 3 | ○ | ○ | ⊚ |
| Example 4 | ○ | ○ | ○ |
| Example 5 | ○ | ○ | ⊚ |
| Example 6 | ○ | ○ | ⊚ |
| Comparative Example 1 | ○ | × | × |
| Comparative Example 2 | ○ | × | × |
| Comparative Example 3 | ○ | × | × |
| Comparative Example 4 | △ | ○ | △ |
| Comparative Example 5 | △ | ○ | △ |
| Comparative Example 6 | △ | ○ | △ |

As shown in Table 3 above, it can be seen that the current collectors according to Examples 1 to 6 of the present invention had low resistivity and excellent strength, compared to the current collectors according to Comparative Examples 1 to 6.

In addition, also in terms of the operation performance of the all-solid-state battery, when the current collectors according to Examples 1 to 6 of the present invention were used, excellent performance was exhibited, compared to the cases of the current collectors according to Comparative Examples 1 to 6 being used. In particular, the current collector in which the negative electrode characteristic material layer was further formed on the Fe-Ni alloy layer exhibited more improved result in battery operation performance than the current collector without the negative electrode characteristic material layer.

Table 4 below shows resistivity and strength results of the current collectors according to Examples 7 to 13 and Comparative Examples 7 to 12, and the results of evaluation on operation performance of the all-solid-state batteries produced using the current collectors.

**[Table 4]**

| Classification | Resistivity | Strength | Operation of all-solid-state battery |
|---|---|---|---|
| Example 7 | ○ | ○ | ○ |
| Example 8 | ○ | ○ | ⊚ |
| Example 9 | ○ | ○ | ⊚ |
| Example 10 | ○ | ○ | ⊚ |
| Example 11 | ○ | ○ | ⊚ |
| Example 12 | ○ | ○ | ⊚ |
| Example 13 | ○ | ○ | ⊚ |
| Comparative Example 7 | ○ | × | × |
| Comparative Example 8 | ○ | × | × |
| Comparative Example 9 | ○ | × | × |
| Comparative Example 10 | × | × | × |
| Comparative Example 11 | × | × | × |
| Comparative Example 12 | × | × | × |

As shown in Table 4 above, it can be seen that the current collectors according to Examples 7 to 13 of the present invention had low resistivity and excellent strength, compared to the current collectors according to Comparative Examples 7 to 12.

In addition, also in terms of the operation performance of the all-solid-state battery, when the current collectors according to Examples 7 to 13 of the present invention were used, excellent performance was exhibited, compared to the case of the current collectors according to Comparative Examples 7 to 12 being used. In particular, the current collector in which the positive electrode characteristic material layer and the negative electrode characteristic material layer were formed on the Fe-Ni alloy layer exhibited more improved result in battery operation performance than the current collector without the positive electrode characteristic material layer and the negative electrode characteristic material layer.

## Claims

1. A Fe-Ni alloy current collector having a low resistance multilayer structure, as a current collector of a battery, comprising:
a Cu foil; and
a Fe-Ni alloy layer formed on at least one surface of the Cu foil, and including iron (Fe) and nickel (Ni).

2. The Fe-Ni alloy current collector having a low resistance multilayer structure according to Claim 1,
wherein the Fe-Ni alloy layer is formed on both surfaces of the Cu foil.

3. The Fe-Ni alloy current collector having a low resistance multilayer structure according to Claim 1, further comprising a negative electrode characteristic material layer or a positive electrode characteristic material layer which is formed on the Fe-Ni alloy layer.

4. The Fe-Ni alloy current collector having a low resistance multilayer structure according to Claim 2, further comprising a negative electrode characteristic material layer formed on the Fe-Ni alloy layer of one surface among the both surfaces, and a positive electrode characteristic material layer formed on the Fe-Ni alloy layer of the other surface among the both surfaces.

5. The Fe-Ni alloy current collector having a low resistance multilayer structure according to Claim 3 or Claim 4,
wherein the negative electrode characteristic material layer comprises one or more selected from the group consisting of nickel (Ni), titanium (Ti), chrome (Cr), molybdenum (Mo), silver (Ag), cobalt (Co), gold (Au), ruthenium (Ru), platinum (Pt), iridium (Ir), and an alloy thereof.

6. The Fe-Ni alloy current collector having a low resistance multilayer structure according to Claim 3 or Claim 4,
wherein the positive electrode characteristic material layer comprises at least one selected from the group consisting of aluminum (Al), nickel (Ni), titanium (Ti), and an alloy thereof.

7. The Fe-Ni alloy current collector having a low resistance multilayer structure according to any one of claims 1 to 4,
wherein the current collector has a thickness of 4 to 20 µm.

8. The Fe-Ni alloy current collector having a low resistance multilayer structure according to any one of claims 1 to 4,
wherein the Cu foil has a thickness of 3 to 14 µm.

9. The Fe-Ni alloy current collector having a low resistance multilayer structure according to any one of claims 1 to 4,
wherein a total thickness of the Fe-Ni alloy layers formed on the both surfaces of the Cu foil is 1 to 6 µm.

10. The Fe-Ni alloy current collector having a low resistance multilayer structure according to any one of claims 1 to 4,
wherein the Fe-Ni alloy layer comprises nickel (Ni) in an amount of 10 to 90 wt% and the remainder being iron (Fe) and unavoidable impurities.

11. The Fe-Ni alloy current collector having a low resistance multilayer structure according to Claim 3 or Claim 4,
wherein the negative electrode characteristic material layer has a thickness of 10 nm to 1 µm.

12. The Fe-Ni alloy current collector having a low resistance multilayer structure according to Claim 3 or Claim 4,
wherein the positive electrode characteristic material layer has a thickness of 0.09 to 2 µm.

13. The Fe-Ni alloy current collector having a low resistance multilayer structure according to any one of claims 1 to 4,
wherein the current collector has a resistivity value of 5×10⁻⁸ Ωm or less.

14. The Fe-Ni alloy current collector having a low resistance multilayer structure according to any one of claims 1 to 4,
wherein the Fe-Ni alloy layer has an average crystal grain size of 15 nm or less (excluding 0 nm), and
the current collector has a tensile strength of 600 MPa or greater, and has an elongation of 3% or greater.

15. A secondary battery comprising:
a first electrode including the current collector described in any one of claims 1 to 4 and a first active material layer formed on the current collector;
a second electrode disposed in the opposite of the first electrode, and including a second current collector and a second active material layer formed on the second current collector; and
an electrolyte disposed between the first electrode and the second electrode to provide an environment where lithium ions are capable of moving.

16. The secondary battery according to Claim 15,
wherein the electrolyte comprises a solid electrolyte.
